# EUROPEAN PATENT APPLICATION

(11) **EP 2 725 774 A2**
(43) Date of publication of application: **30.04.2014**
(21) Application number: 13181495.6
(22) Date of filing: 23.08.2013
(51) Int. Cl.: H04N 1/00

(54) **Electronic apparatus, image forming apparatus and wireless connection method**

(30) Priority: 29.10.2012 KR 20120120681; 26.03.2013 KR 20130032209
(71) Applicant: Samsung Electronics Co., Ltd, Gyeonggi-do 443-742 (KR)
(72) Inventor: Lee, Sang-min, Gyeonggi-do (KR); Ko, San-ju, Gyeonggi-do (KR); Boo, Deok-hee, Seoul (KR)
(74) Representative: Walaski, Jan Filip

(57) **Abstract**

An electronic apparatus includes a network managing unit configured to form a link to an access point through a first communication network and form a link to an image forming apparatus through a second communication network different from the first communication network, a collecting unit configured to collect wireless setting information of the access point, and a controller configured to transmit the collected wireless setting information to the image forming apparatus using the second communication network to form a link with the image forming apparatus via the access point.

## Description

The present invention is directed to an electronic apparatus, an image forming apparatus and a wireless connection method, more particularly, to an electronic apparatus, an image forming apparatus, an image forming system, a wireless connection method, an image forming method, and a computer-readable recording medium, which are capable of easily performing wireless setting of an image forming apparatus.

A conventional image forming apparatus prints printing data (data to be printed) generated in a printing control terminal apparatus, such as a computer, on a recording medium, such as paper. Examples of the image forming apparatuses include copiers, printers, facsimiles, scanners and multiple function peripherals (MFPs) configured to multiply implement functions thereof through one apparatus.

Recently, the conventional image forming apparatuses support wireless connection and are connected to networks to receive printing data from various host apparatuses. In the related art, so as to wirelessly connect the image forming apparatuses to the access point, there is a method of setting wireless connection by directly inputting wireless setting information on a menu of the image forming apparatus using a liquid crystal display (LCD) panel of the image forming apparatus, a method of setting wireless connection in a host apparatus by using a wireless payments standard (WPS) button or by connecting an image forming apparatus and the host apparatus using a universal serial bus (USB), and the like.

However, the conventional image forming apparatus may not include an LCD panel or may not support a WPS button manner. Therefore, in this case, the method of setting wireless connection of the image forming apparatus by connecting the host apparatus and the image forming apparatus using a USB cable is typically performed. However, it is inconvenient to require a USB cable in order for a user to use a wireless printer.

The present general inventive concept provides an electronic apparatus, an image forming apparatus, a wireless connection method, an image forming method, and a computer-readable recording medium, which are capable of easily performing wireless setting of an image forming apparatus.

Additional features and utilities of the present general inventive concept will be set forth in part in the description which follows and, in part, will be obvious from the description, or may be learned by practice of the general inventive concept.

The foregoing and/or other features and utilities of the present general inventive concept are achieved by providing an electronic apparatus, including a network managing unit to form a link with an access point through a first communication network and form a link with an image forming apparatus through a second communication network different from the first communication network, a collecting unit to collect wireless setting information of the access point, and a controller to transmit the collected wireless setting information to the image forming apparatus using the second communication network to form a link with the image forming apparatus via the access point.

The second communication network may be a network separated from the first communication network in a physical or serviced manner.

The first communication network may be a wireless local area network (LAN) and the second communication network may be at least one selected from a group comprising wireless fidelity (Wi-Fi) Direct, Bluetooth, software enabled access point (soft AP), and an Ad-hoc mode.

The network managing unit may search wireless communication apparatuses supporting communication of the second communication network around the electronic apparatus and form the link with one of the searched wireless communication apparatuses using the second communication network.

The network managing unit may identify the image forming apparatus among the searched wireless communication apparatuses and form the link with the wireless communication apparatus identified as the image forming apparatus using the second communication network.

The network managing unit may identify the image forming apparatus among the searched wireless communication apparatuses using preset identification information.

The electronic apparatus may further include a user interface unit to display the searched wireless communication apparatuses and receive a selection of one of the displayed wireless communication apparatuses, such that the network managing unit may form the link with the selected wireless communication apparatus through the second communication network.

The collecting unit may select the access point to which the image forming apparatus linked using the second communication network is connectable and collect wireless setting information of the selected access point.

The electronic apparatus may further include a user interface unit configured to, when the connectable access point is plural, display the searched access points and receive a selection of one of the displayed access points, such that the collecting unit may collect the wireless setting information of the selected access point.

The controller may determine whether the image forming apparatus is connectable to the access point and the electronic apparatus may further include a user interface unit configured to display information to notify that the image forming apparatus is not connectable to the access point when the image forming apparatus is not connectable to the access point.

The wireless setting information may be at least one selected from the group consisting of security information, a service set identifier (SSID), and a connection password.

The electronic apparatus may further include a job generator configured to generate printing data; and a communication interface unit configured to transmit the generated printing data using the link with the image forming apparatus via the access point.

The network managing unit may release the link with the image forming apparatus using the second communication network when the link with the image forming apparatus via the access point is formed.

The foregoing and/or other features and utilities of the present general inventive concept may also be achieved by providing an image forming apparatus including a network managing unit to form a link with an electronic apparatus using a second communication network, a communication interface unit to receive wireless setting information of an access point from the electronic apparatus through the second communication network, a controller to control the network managing unit to form a link with the access point via a third communication network different from the second communication network using the received wireless setting information, and an image forming unit to print printing data when the printing data is received using the third communication network.

The foregoing and/or other features and utilities of the present general inventive concept may also be achieved by providing a wireless connection method of an electronic apparatus, the wireless connection method including forming a link with an access point using a first communication network and forming a link with an image forming apparatus using a second communication network different from the first communication network, collecting wireless setting information of the access point, and transmitting the collected wireless setting information to the image forming apparatus through the second communication network to form a link with the image forming apparatus via the access point.

The second communication network may be a network separated from the first communication network in a physical or serviced manner.

The first communication network may be a wireless local area network (LAN) and the second communication network may be at least one selected from a group comprising wireless fidelity (Wi-Fi) Direct, Bluetooth, software enabled access point (soft AP), and an Ad-hoc mode.

The wireless connection method may further include searching wireless communication apparatuses supporting a communication manner of the second communication network around the electronic apparatus, such that the forming of a link may include forming the link with one of the searched wireless communication apparatuses via the second communication network.

The wireless connection method may further include identifying the image forming apparatus among the searched wireless communication apparatuses, such that the forming of a link may include forming the link with a wireless communication apparatus identified as the image forming apparatus through the second communication network.

The identifying may include identifying the image forming apparatus among the searched wireless communication apparatuses using preset identification information.

The wireless connection method may further include displaying the searched wireless communication apparatuses, and receiving a selection of one of the displayed wireless communication apparatuses, such that the forming of a link may include forming the link with the selected wireless communication apparatus via the second communication network.

The collecting may include selecting an access point to which the image forming apparatus linked via the second communication network is connectable and collecting wireless setting information of the selected access point.

The wireless connection method may further include, when the connectable access point is plural, displaying the searched access points, and receiving a selection of one of the displayed access points, such that the collecting may include collecting the wireless setting information of the selected access point.

The wireless connection method may further include determining whether the image forming apparatus is connectable to the access point, and displaying information to notify that the image forming apparatus is not connectable to the access point when the image forming apparatus is not connectable to the access point.

The wireless setting information may include at least one selected from a group comprising security information, a service set identifier (SSID), and a connection password.
The wireless connection method may further include generating printing data, and transmitting the generated printing data through the link with the image forming apparatus via the access point.

The wireless connection method may further include releasing the link with the image forming apparatus via the second communication network when the link with the image forming apparatus via the access point is formed.

The foregoing and/or other features and utilities of the present general inventive concept may also be achieved by providing an image forming method in an image forming apparatus, the image forming method including forming a link with an electronic apparatus through a second communication network, receiving wireless setting information of an access point through the second communication network, forming a link with the access point via a third communication network different from the second communication network using the received wireless setting information, receiving printing data via the third communication network, and printing the received printing data.

The foregoing and/or other features and utilities of the present general inventive concept may also be achieved by providing a non-transitory computer-readable recording medium including computer-readable codes to execute a wireless connection method of an electronic apparatus, the wireless connection method including forming a link with an access point using a first communication network and forming a link with an image forming apparatus using a second communication network different from the first communication network, collecting wireless setting information of the access point, and transmitting the collected wireless setting information to the image forming apparatus through the second communication network to form a link with the image forming apparatus via the access point.

The foregoing and/or other features and utilities of the present general inventive concept may also be achieved by providing an image forming system, including an access point linked to an external apparatus to provide an Internet network to the image forming system based on wireless setting information, an electronic apparatus to generate transmittable printing data, and an image forming apparatus linked to the electronic apparatus via a first communication network to perform a printing job corresponding to the printing data received from the electronic apparatus via a second communication network in response to the wireless setting information of the access point received from the electronic apparatus.

The electronic apparatus may transmit the wireless setting information of the access point to the image forming apparatus to link the image forming apparatus to the access point via a third communication network.

The wireless setting information may include information required to allow the image forming apparatus to wirelessly connect to the access point.

The electronic apparatus may include a user interface unit to allow a user to select the printing job and to select at least one of the image forming apparatus from among a plurality of image forming apparatuses and the access point from among a plurality of access points, and a job generator to generate the transmittable printing data based on the printing job selected by the user.

These and/or other features and utilities of the present general inventive concept will become apparent and more readily appreciated from the following description of the embodiments, taken in conjunction with the accompanying drawings in which:
FIG. 1 is a block diagram illustrating an image forming system according to an exemplary embodiment of the present general inventive concept;
FIG. 2 is a block diagram schematically illustrating an electronic apparatus according to an exemplary embodiment of the present general inventive concept;
FIG. 3 is a block diagram specifically illustrating an electronic apparatus according to an exemplary embodiment of the present general inventive concept;
FIGS. 4 and 5 are views illustrating various examples of a user interface window displayable in a user interface unit of FIG. 3;
FIG. 6 is a block diagram illustrating an image forming apparatus according to an exemplary embodiment of the present general inventive concept;
FIG. 7 is a sequence diagram illustrating a wireless connection method according to an exemplary embodiment of the present general inventive concept;
FIG. 8 is a flowchart illustrating a wireless connection method according to an exemplary embodiment of the present general inventive concept;
FIGS. 9 through 12 are flowcharts illustrating wireless connection methods according to a type of a second communication network; and
FIG. 13 is a flowchart illustrating an image forming method according to an exemplary embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

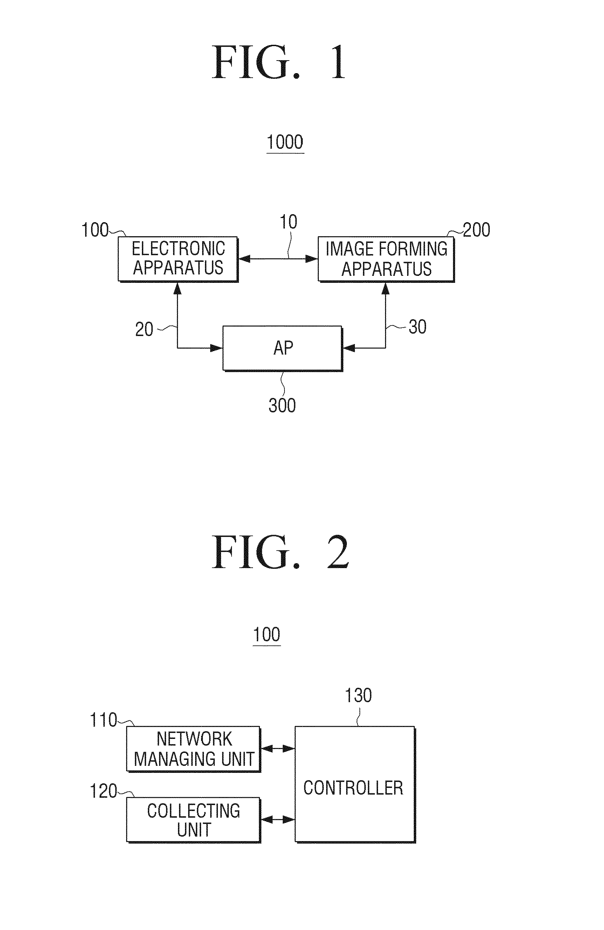

FIG. 1 is a block diagram illustrating an image forming system 1000 according to an exemplary embodiment of the present general inventive concept.

Referring to FIG. 1, the image forming system 1000 includes an electronic apparatus 100, an image forming apparatus 200 and an access point (AP) 300.

The electronic apparatus 100 may transmit printing data to the image forming apparatus 200. Here, the electronic apparatus 100 may include a personal computer (PC), a laptop computer, a portable phone, a smart phone, a portable multimedia player (PMP), an MPEG-1 audio layer 3 (MP3), etc., but is not limited to, which may use two or more communication networks. The communication network is a network configured to perform connection to an external apparatus. Networks different from each other denote networks separated from each other in a physical or serviced manner. For example, a first communication network may be a wireless local area network (LAN) or a wired LAN and a second communication network may be Wi-Fi Direct, Bluetooth, soft AP, an Ad-hoc mode, etc., but neither the first nor second communication networks are limited thereto. The third communication network may be a wireless LAN. The Wi-Fi Direct is a function that can connect to mobile apparatuses or Wi-Fi function-mounted electronic apparatuses without a wireless sharer.

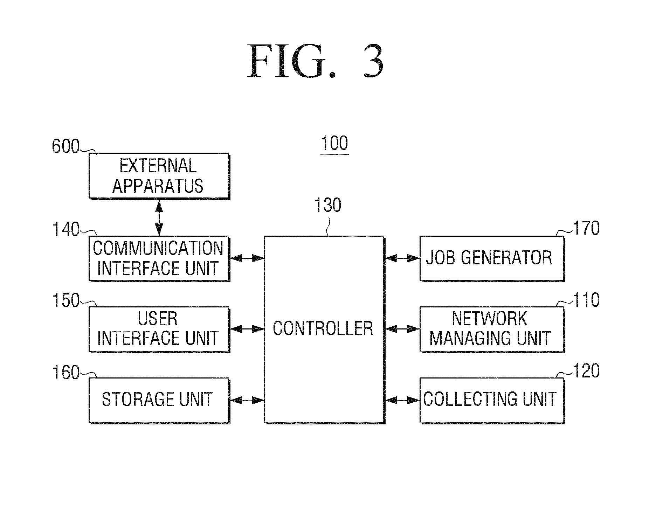

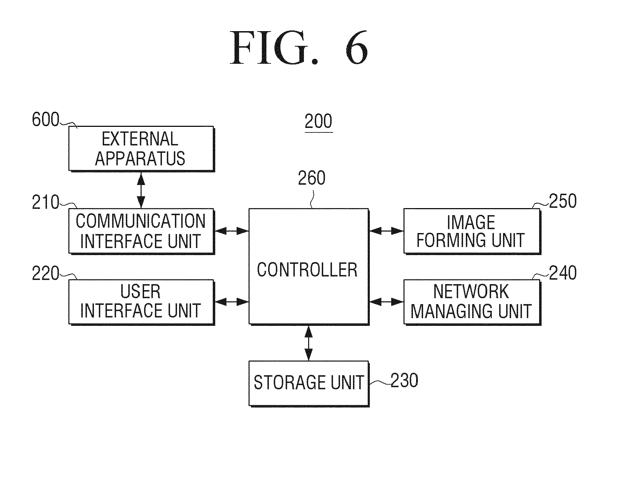

Specifically, the electronic apparatus 100 may be linked with the access point AP 300 through a first communication network 10 and connected to external apparatuses 600 (e.g., an Internet network), as illustrated in FIGS. 3 and 6, outside the image forming system via the access point 300. The first communication network 10 may have an LAN type such as a wired LAN or a wireless LAN.

The electronic apparatus 100 may be linked with the image forming apparatus 200 through a second communication network 20 and transmit wireless setting information of the access point 300 to the image forming apparatus 200. The second communication 20 network may include Wi-Fi Direct, Bluetooth, soft AP, an Ad-hoc mode, etc., but is not limited thereto. The wireless setting information may include information required to wirelessly connect to the access point 300, and may include information for authentication, such as security information, an SSID, or a connection password.

Through transmission of the wireless setting information, the image forming apparatus 200 may be linked with the access point 300 through a third communication network 30. The third communication network 30 may be a wireless LAN. Accordingly, the third communication network 30 may be the same as or different from the first communication network 10.

When the image forming apparatus 200 is linked with the access point 300 through the third communication network 30, links between the first communication network 10 and the third communication network 30 are formed between the electronic apparatus 100 and the image forming apparatus 200, respectively, via the access point 300 and the electronic apparatus 100 may transmit printing data through the first communication network 10 and the third communication network 30. Detailed configuration and operation of the electronic apparatus 100 will be described later with reference to FIGS. 2 and 3.

The image forming apparatus 200 performs a printing job corresponding to the received printing data. The image forming apparatus 200 may perform generation, printing, reception, transmission, scanning, copying, faxing, etc., of image data, and typically includes a printer, a scanner, a copier, a facsimile, a multi-function peripheral (MFP), which may be implemented to combine the functions thereof, etc., but is not limited thereto.

Specifically, when the image forming apparatus 200 receives connection request information from the electronic apparatus 100, the image forming apparatus 200 may be linked via the second communication network 20 to the electronic apparatus 100 in response to the connection request information of the electronic apparatus 100. Subsequently, when the image forming apparatus 200 receives wireless setting information from the electronic apparatus 100, the image forming apparatus 200 may form a link via the third communication network 30 with the access point 300 using the received wireless setting information, and the first communication network 10 and the third communication network 30 may be used to form links to the electronic apparatus 100 and the image forming apparatus 200, respectively, via the access point 300. The image forming apparatus 200 may receive printing data and output the received printing data through the first communication network 10 and third communication network 30.

The access point 300 relays data between the electronic apparatus 100 and the image forming apparatus 200. Specifically, the access point 300 may be linked with the electronic apparatus 100 in a communication manner of the first communication network 10 and linked with the image forming apparatus 200 in a communication manner of the third communication network 30. When the access point 300 is linked with the electronic apparatus 100 and the image forming apparatus 200 and the printing data is received from the electronic apparatus 100, the access point 300 may transmit the received printing data to the image forming apparatus 200. On the other hand, the access point 300 may be connected to an external Internet network.

In the image forming system 1000 according to the above-described exemplary embodiment, the electronic apparatus 100 may transmit the wireless setting information, which is required to connect the image forming apparatus 200 to the access point 300, to the image forming apparatus 200 via the second communication network 20. Therefore, the electronic apparatus 100 may perform wireless setting between the image forming apparatus 200 and the access point 300 without a separate wired cable such as a USB cable or Ethernet cable.

FIG. 1 illustrates that the electronic apparatus 100 is connected to a single image forming apparatus 200, but the electronic apparatus 100 may be connected to a plurality of image forming apparatuses 200 and a plurality of electronic apparatuses 100 may be connected to one image forming apparatus 200.

Further, FIG. 1 illustrates that the first communication network 10 is different from the third communication network 30, but the first communication network 10 may be the same as the third communication network 30. In this case, the first communication network 10 and the third communication network 30 may both be wireless LANs. FIG. 2 is a block diagram schematically illustrating an electronic apparatus 100 according to an exemplary embodiment of the present general inventive concept. Referring to FIG. 2, the electronic apparatus 100 may include a network managing unit 110, a collecting unit 120, and a controller 130.

Referring to FIGS. 1 and 2, the network managing unit 110 forms a link with the access point 300 through the first communication network 10. Specifically, the network managing unit 110 may be linked with the access point 300 in a wireless LAN manner or a wired LAN manner.

The network managing unit 110 activates a communication function (for example, a Wi-Fi Direct function) of the second communication network 20 of the electronic apparatus 100 when an application (e.g., a printing application or a printer driver installation program, hereinafter, referred to as an installation application) corresponding to a new installation of the image forming apparatus 200 is driven. Specifically, when a user drives the installation application to perform a new connection with the image forming apparatus 200, the network managing unit 110 may activate the function of the second communication network 20. The second communication network 20 may include Wi-Fi Direct, Bluetooth, soft AP, an ad-hoc mode, etc., but is not limited thereto.

The communication function of the second communication network 20 may be activated immediately when the installation application is driven. However, the network managing unit 110 may be implemented to receive confirmation whether the user activates the communication function of the second communication network 20 from the user and perform activation of the communication function of the second communication network 20 according to the selection of the user, when the installation program is driven in a state in which the communication function of the second communication network 20 is turned off.

The network managing unit 110 connects the electronic apparatus 100 to an image forming apparatus 200 that is located in the vicinity near or around the electronic apparatus 100 via the second communication network 20. Specifically, the network managing unit 110 may search wireless communication apparatuses supporting a communication type of the second communication network 20, which is in the vicinity of the electronic apparatus.

Although the electronic apparatus 100 may be connected to the image forming apparatus 200 through the second communication network 20, a link via the access point 300 may be formed. This is because the electronic apparatus 100 is designed to use the image forming apparatus 200 as a network printer. Specifically, this is because when the image forming apparatus 200 and the electronic apparatus 100 are connected through the second communication network 20, only the electronic apparatus 100 directly connected to the image forming apparatus 200 uses the corresponding image forming apparatus 200, but other electronic apparatuses cannot use the corresponding image forming apparatus 200.

The network managing unit 110 identifies the searched wireless communication apparatuses. Specifically, the network managing unit 110 may identify whether the searched wireless communication apparatuses supporting the communication of the second communication network 20 are image forming apparatuses 200 by analyzing types of the searched wireless communication apparatuses.

The network managing unit 110 establishes a connection with one of the searched wireless communication apparatuses that is identified as the image forming apparatus 200. Specifically, in response to the wireless communication apparatus being identified as the image forming apparatus 200, the network managing unit 110 may perform a communication connection of the second communication type to the wireless communication apparatus identified as the image forming apparatus 200. The network managing unit 110 may have already known apparatus information corresponding to an image forming apparatus 200 to be connected, and may perform a connection to the wireless communication apparatus having the already known apparatus information identified as the image forming apparatus 200 among the wireless communication apparatuses. For example, when a name of an image forming apparatus 200 to be newly installed is 'AAA,' and an installation program provided from a manufacturer of the image forming apparatus 200 is driven to perform the operation as described in the exemplary embodiment of the present general inventive concept, the installation program may have already known the name 'AAA' of the newly installed image forming apparatus, and accordingly, the network managing unit 110 may establish a connection with the wireless communication apparatus having the name 'AAA' from among the wireless communication apparatuses identified as the image forming apparatus 200.

The network managing unit 110 may transmit connection request information including preset authentication information to the wireless communication apparatus identified as the image forming apparatus 200 in order to perform wireless connection with the image forming apparatus 200 without additional acknowledgement in the image forming apparatus 200. The authentication information may be one of information of the installation application (e.g., a mobile printing application) or a pin code pre-stored in the image forming apparatus 200.

Although the exemplary embodiment of the present general inventive concept has been described to perform a connection with the wireless communication apparatus identified as the image forming apparatus 200 without a separate confirmation procedure when only one image forming apparatus 200 is searched, it may also be implemented to receive a confirmation whether to perform connection from the user and then perform the connection even when only one image forming apparatus 200 is searched.

According to the exemplary embodiment of the present general inventive concept, when a plurality of wireless communication apparatuses are identified as image forming apparatuses 200 and the network managing unit 110 does not know the information of the image forming apparatus 200 to be connected, the network managing unit 110 may perform the connection with one image forming apparatus 200 selected by the user among the plurality of image forming apparatuses 200 through the second communication network 20. Specifically, the electronic apparatus 100 may display the plurality of searched image forming apparatuses 200 on a user interface unit 150, thereby allowing the user to select one of the plurality of image forming apparatuses 200.

Furthermore, when the electronic apparatus 100 does not simultaneously support the communication type of the first communication network 10 and the communication type of the second communication network 20, that is, when the electronic apparatus 100 may perform only one of the two communication types (e.g., when the first communication network 10 is a wireless LAN and the second communication network 20 is any one of Wi-Fi Direct, soft AP, and an ad-hoc mode), the network managing unit 100 may selectively activate the communication function of the first communication network 10 of the electronic apparatus 110 or the communication function of the second communication network 20 thereof.

The network managing unit 110 may release the link with the image forming apparatus 200 using the second communication network 20. Specifically, the network managing unit 110 may release the link with the image forming apparatus 200 using the second communication network 20 when the link with the image forming apparatus 200 via the access point 300 is formed.

The network managing unit 110 may select one of a plurality of second communication networks 20. Specifically, when the electronic apparatus 100 includes the plurality of second communication networks 20, the network managing unit 110 may select one of the plurality of second network communication networks 20. The one of the plurality of second communication networks 20 may be automatically selected based on the communication network supported in the image forming apparatus 200, or alternatively, may be determined by a selection of the user.

The collecting unit 120 collects wireless setting information of the access point 300. Specifically, the collecting unit 120 may collect the information required to wirelessly connect to the access point 300, such as security information, an SSID, or a connection password from the access point 300.

According to the exemplary embodiment of the present general inventive concept, when there are a plurality of access points 300 to which the image forming apparatus 200 and the electronic apparatus 100 can be commonly connected, the collecting unit 120 may collect wireless setting information of an access point 300 to which the electronic apparatus 100 is connected, or alternatively, may collect wireless setting information of an access point 300 closest to the image forming apparatus 200.

Furthermore, the collecting unit 120 may be implemented to collect wireless setting information of one access point 300 selected by the user from among the plurality of access points 300. Specifically, the electronic apparatus 100 may display the plurality of access points 300 on the user interface unit 150 to allow the user to select one access points 300 from among the plurality of access points 300. The collecting unit 120 may collect the wireless setting information of the access point 300 selected by the user.

The collecting unit 120 may generate an Internet protocol (IP) address. Specifically, when an IP address of the first communication network 10 is a static IP address, the collecting unit 120 may generate an IP address to be applied to the image forming apparatus 200 according to a preset algorithm and transmit the generated IP address as wireless setting information to the image forming apparatus 200. Furthermore, when registration of the IP address corresponding to the image forming apparatus 200 is necessary, the collecting unit 120 may register the generated IP address in the access point 300.

The controller 130 controls various components within the electronic apparatus 100. For example, when an application is selected by the user, the controller 130 may drive the application selected by the user.

The controller 130 may control the network managing unit 110 to activate the communication function of the second communication network 20 when the application selected by the user is the installation application to perform a wireless connection setting of the image forming apparatus 200.

The controller 130 may control the network managing unit 110 so that image forming apparatuses 200, which can be connected in the communication type of the activated second communication network 20, are searched. Further, the controller 130 may control the network managing unit 110 to perform wireless connection with the searched image forming apparatus 200 supporting the communication type of the second communication network 20.

When the image forming apparatus 200 to be connected is determined, the controller 130 controls the collecting unit 120 to collect the wireless setting information of the access point 300 linked through the first communication network 10 and to transmit the collected wireless setting information to the image forming apparatus 200 through the second communication network 20 when the wireless setting information is collected.
When a file or a web page on which a printing job is to be performed is selected by the user, the controller 130 may transmit printing data generated in a job generator 170 through the link with the image forming apparatus 200 via the access point 300.

The electronic apparatus 100 may further include other elements other than the above-described configuration elements. More detailed configuration of the electronic apparatus 100 will be described later with reference to FIG. 3.

FIG. 3 is a detailed block diagram illustrating an electronic apparatus 100 according to an exemplary embodiment of the present general inventive concept.

Referring to FIG. 3, the electronic apparatus 100 may include a network managing unit 110, a collecting unit 120, a controller 130, a communication interface unit 140, the user interface unit 150, a storage unit and the job generator 170.

Operation and functions of the network managing unit 110, collecting unit 120 and controller 130 are the same as those of the elements described above with reference to FIG. 2, and thus repetitive description thereof will be omitted.

The communication interface unit 140 may be formed to connect the electronic apparatus 100 to an external apparatus 600 and may be connected to the external apparatus 600 through a LAN and an Internet network or through a particular type of wireless communication (e.g., wireless communication such as Bluetooth, global system for mobile communications (GSM), universal mobile telecommunications system (UMTS), long term evolution (LTE), wireless broadband (WiBRO), etc., but is not limited thereto).

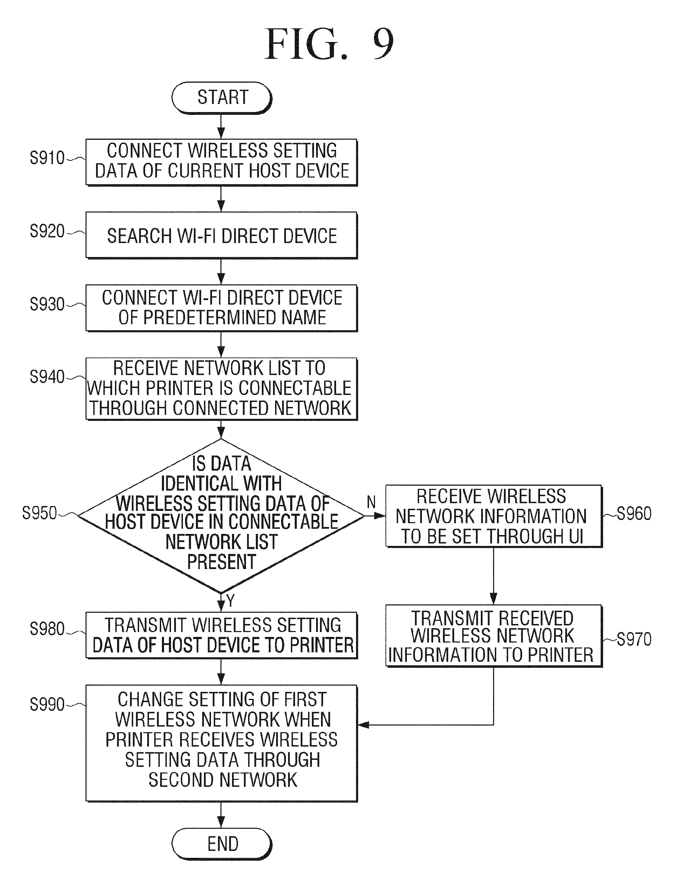

The communication interface unit 140 may be connected to the external apparatus 600 through the first communication network 10, and the communication interface unit 140 may be connected to an external apparatus 600 through the second communication network 20. The electronic apparatus 100 may be implemented to simultaneously support the communication type of the first communication network 10 as well as the communication type of the second communication network 20, or may support only one of the communication types of the first communication network 10 and or the second communication network 20. The first communication network 10 may be a wireless LAN or a wired LAN, and the second communication network may be Wi-Fi Direct, Bluetooth, soft AP, an ad-hoc mode, etc., but is not limited thereto. An operation of the electronic apparatus 100 according to a type of the second communication network 20 will be described later with reference to FIGS. 9 through 12.

Further, the communication interface unit 140 transmits the collected wireless setting information. Specifically, the communication interface unit 140 may directly transmit the collected wireless setting information to the image forming apparatus 200 through the link formed via the second communication network 20.

The communication interface unit 140 may receive apparatus information (e.g., media access control (MAC) information) of the image forming apparatus 200.

The communication interface unit 140 may transmit printing data. Specifically, the communication interface unit 140 may transmit the printing data generated in the job generator 170 linked according to control of the above-described network managing unit 110. At this time, the printing data is transmitted to the image forming apparatus 200 via the access point 300.

The user interface unit 150 may include a plurality of functional keys that allow the user to set or select various kinds of functions supported in the electronic apparatus 100, and display various pieces of information provided from the electronic apparatus 100. The user interface unit 150 may be include a device such that an input and an output may be simultaneously performed, such as a touch screen, or may also include a device in which a mouse and a monitor are combined.

The user interface 150 may display a list of various kinds of applications that can be selected by the user. Specifically, the user interface unit 150 may display a user interface window to receive a selection of one of applications installed in the electronic apparatus 100, and to receive a selection of an image forming apparatus from the displayed user interface window. Therefore, the user may select an installation application to wireless set the image forming apparatus 200 via the user interface window provided from the user interface unit 150.

Thus, when the installation application is driven, the communication function of the second communication network 20 of the electronic apparatus 100 is activated. As described above, an operation of searching to find the image forming apparatus 200 supporting the communication function of the second communication network 20 that is in the vicinity of the electronic apparatus 100 is performed in the network managing unit 110.

The user interface unit 150 may also display the searched wireless communication apparatuses. At this time, the user interface unit 150 may display only wireless communication apparatuses identified as the image forming apparatus 200. The displaying operation may be performed only when a plurality of image forming apparatuses 200 are searched or when the pre-selected image forming apparatus 200 is not searched.

The user interface unit 150 may select one of the displayed wireless communication apparatuses. Therefore, the selected wireless communication apparatus and the electronic apparatus 100 may be connected by the above-described network managing unit 110.

The user interface unit 150 may receive wireless setting information of the selected wireless communication apparatus. Specifically, when wireless communication apparatus selected by the user is a wireless communication apparatus of which the wireless setting information cannot be collected in the electronic apparatus 100, the user interface unit 150 may display a user interface window configured to receive wireless setting information, and may receive the wireless setting information selected through the displayed user interface window.

The user interface unit 150 may display a plurality of access points 300 to which the image forming apparatus 200 linked through the second communication network 20 can be connected. The display operation may be performed only when a plurality of access points 300 are searched or when the image forming apparatus 200 cannot be connected to an access point 300 of which the wireless setting information is collected.

The user interface unit 150 may receive a selection of one displayed access point 300 from among of the plurality of displayed access points 300. Therefore, the wireless setting information of the selected access point 300 may be collected in the collecting unit 120, or alternatively, may be received from the user.
The user interface unit 150 receives a printing command. Specifically, the user interface unit 150 may display a plurality of printing files, and may receive a printing command corresponding to at least one of the displayed printing files.

The user interface unit 150 receives a printing option. Specifically, the user interface unit 150 may display a user interface window to receive a setting of the printing option, and may receive the printing option to be adapted to a printing target content selected by the user through the displayed user interface window.

The user interface unit 150 displays a printing state. Specifically, the user interface unit 150 may display a printing progress state to the user after the printing command. For example, when printing completion information is received from the image forming apparatus 200, the user interface 150 may display printing completion. Further, when error information corresponding to an error occurrence is received, the user interface unit 150 may display the error occurrence.

The user interface unit 150 may display information that the image forming apparatus 200 cannot be connected to the access point 300 when the image forming apparatus 200 cannot be connected to the access point 300. Specifically, when a wireless network is a static IP system, that is, when wireless connection can be performed only in a state in which assignment of an IP address of an image forming apparatus 200 to be connected is necessary or in a state in which a MAC address has to be registered in the access point, the user interface unit 150 may display that the image forming apparatus 200 can be connected to the access point 300, and may display a method of solving the above-described method. For example, the user interface unit 150 may display information of an IP address assignment method, provide a method of registering the MAC address in the access point, or display the MAC address of the image forming apparatus 200 to be connected.

The storage unit 160 stores a program to drive an electronic apparatus 100. Specifically, the storage unit 160 may store a program which is a collection of various commands required to drive the electronic apparatus 100. Accordingly, the program may include an operating system and various applications.

The storage unit 160 stores various kinds of contents. The storage unit 160 may store printing data generated in the job generator 170, or may store a web page loaded through the communication interface unit 140.

The storage unit 160 may store application information or information corresponding to a pin code pre-stored in the image forming apparatus 200. The application information may be information that can be recognized as the authenticated apparatus in the image forming apparatus 200 and include a password, a pin code, etc., but is not limited thereto.

Further, the storage unit 160 stores the collected wireless setting information. Specifically, the storage unit 160 may store the wireless setting information collected in the collecting unit 120. The wireless setting information may be previously collected and stored before the driving of the installation application. That is, information used to perform the connection process of the electronic apparatus 100 to an initial access point 300 may be stored.

The storage unit 160 may include a storage medium within the electronic apparatus 100, or an external storage medium such as a universal serial bus (USB) memory, a removable disc including a flash memory, etc., but is not limited thereto, a storage medium connected to an imaging apparatus, or a web server through a network.

The job generator 170 generates printing data. Specifically, the job generator 170 may generate printing data corresponding to a file (e.g., an image file and a text file) on which the user is to perform a printing job. The printing data may include a printer language such as postscript (PS) or printer control language (PCL), but is not limited thereto. When the image forming apparatus 200 supports direct printing, the printing data may be a file in a portable document format (PDF), extensible markup language (XML) paper specification (XPS), Microsoft windows device independent bitmap (BMP), joint picture group (JPG), etc., but is not limited thereto.

When a printing option is selected by a user through the user interface unit 150, the job generator 170 may generate the printing data by reflecting the selected printing option. Furthermore, when a file is transmitted in a direct printing manner without separate file conversion, the job generator 170 may convert the received printing option to a command that can be recognized by the image forming apparatus 200, and may transmit the converted printing option to the image forming apparatus 200.

The electronic apparatus 100 according to the above-described exemplary embodiment of the present general inventive concept transmits the wireless setting information required to perform a wireless connection between the access point 300 and the image forming apparatus 200 via the second communication network 20, and thus can automatically set a wireless connection of the image forming apparatus 200 to the access point 300 with a separate wired cable.

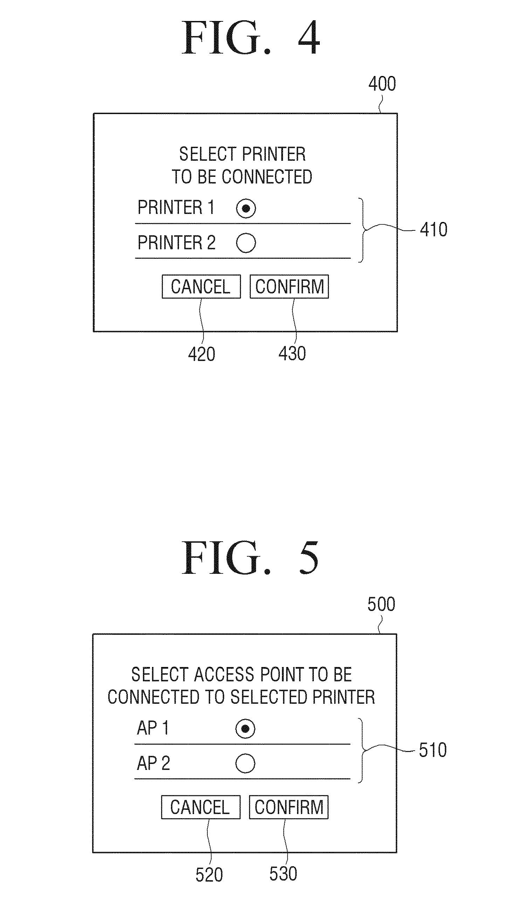

FIGS. 4 and 5 are views illustrating various examples of a user interface window to be displayed in a user interface unit 150 of FIG. 3.

Specifically, FIG. 4 is a view illustrating an example of a user interface window 400 to be displayed when a plurality of image forming apparatuses 200 are searched.

Referring to FIG. 4, the user interface window 400 includes a first region 410, a cancellation region 420, and a confirmation region 430.

The first region 410 displays image forming apparatuses 200 that can be connected via a communication link provided by the second communication network 20 around the electronic apparatus 100. Specifically, when the user drives an installation application, the electronic apparatus 100 activates a communication function of the second communication network 20 and searches to find image forming apparatuses 200 that support the communication function of the second communication network 20, which are located in a vicinity near the electronic apparatus 100. The image forming apparatuses 200 that are searched during the searching process are displayed in the first region 410 of the user interface window 400. The user may select an image forming apparatus 200 to be connected on the displayed first region 410.

The cancellation region 420 is a region configured to receive a cancellation command of a connection job.

The confirmation region 430 is a region configured to receive a command to perform the connection job with the image forming apparatus 200 selected in the first region 410. When the user selects the confirmation region 430, the connection to the image forming apparatus 200 selected in the first region 410 using the second communication network 20 is performed

FIG. 5 is a view illustrating an example of a user interface window 500 to be displayed when a plurality of access points 300 are present.

Referring to FIG. 5, the user interface window 500 includes a second region 510, a cancellation region 520, and a confirmation region 530.

The second region 510 displays access points 300 to which an image forming apparatus 200 that is linked through the second communication network 200 can be connected. The user may select an access point 300 to be connected to the image forming apparatus 200 through the second region 510.

The cancellation region 520 is a region configured to receive a cancellation command of a connection job.

The confirmation region 530 is a region configured to receive a command to perform the connection job with the access point 300 selected in the second region 510. When the user selects the confirmation region 530, the electronic apparatus 100 may collect wireless setting information of the selected access point 300 and transmit the collected wireless setting information to the image forming apparatus 200.

FIG. 6 is a block diagram illustrating an image forming apparatus according to an exemplary embodiment of the present general inventive concept.

Referring to FIG. 6, an image forming apparatus 200 may include a communication interface unit 210, a user interface unit 220, a storage unit 230, a network managing unit 240, an image forming unit 250, and a controller 260. Here, the image forming apparatus 200 may include a copier, a printer, a facsimile, or a MFP configured to multiply implement functions thereof through one apparatus, which supports a plurality of communication networks.

The communication interface unit 210 may be formed to connect the image forming apparatus 200 to an external apparatus 600 and may be connected to the external apparatus 600 through a LAN and an Internet network or through a wireless communication (e.g., wireless communication such as Bluetooth, GSM, UMTS, LTE, or WiBRO). The communication interface unit 210 may be connected to the external apparatus 600 through the third communication network 30, and the communication interface unit 210 may also be connected to an external apparatus 600 through the second communication network 20.

The communication interface unit 210 receives connection request information. Specifically, the communication interface unit 210 may receive the connection request information to perform link formation using the second communication network 20 from the electronic apparatus 100.

The communication interface unit 210 transmits acknowledgement information. Specifically, the communication interface unit 210 may transmit the acknowledgement information that acknowledges the communication connection of the second communication network 20 to the electronic apparatus 100 authenticated in the network managing unit 240 or acknowledged by the user.

The communication interface unit 210 receives wireless setting information of the access point 300 through the second communication network 20. The wireless setting information is information required to allow the image forming apparatus 200 to be wirelessly connected to the access point 300, for example, security information, an SSID, a connection password, etc., but is not limited thereto

The communication interface unit 210 receives printing data. Specifically, the communication interface unit 210 may receive the printing data from the electronic apparatus 100 when the link with the access point 300 through the third communication network 30 is formed. The printing data may be data of a printing language such as PS or PCL. The printing data may be a file in a format of PDF, XPS, BMP, or JPG when the image forming apparatus 200 supports direct printing.

The communication interface unit 210 may transmit a printing execution result to the electronic apparatus 100. Specifically, the communication interface unit 210 may notify the corresponding electronic apparatus 100 of the printing completion when the printing job is completed.

The user interface unit 220 may include a plurality of functional keys configured to cause the user to set or select various kinds of functions supported by the image forming apparatus 200, and may display various pieces of information provided by the image forming apparatus 200. The user interface unit 220 may be implemented by a device in which an input and an output are simultaneously implemented, such as a touch screen, or by a device in which a mouse and a monitor are combined.

The user interface unit 220 may display that an apparatus, which requests connection in the communication type of the second communication network 20, is present. Specifically, the user interface unit 220 may display that the electronic apparatus 100, which requests the connection in the communication type of the second communication network 20, is present when connection request information is received from the electronic apparatus 100. Therefore, the user may determine whether to wirelessly connect the image forming apparatus 200 to the electronic apparatus 100 that requests the connection in the communication manner of the second communication network 20 and whether to perform authentication of the electronic apparatus 100.

The displaying and authentication operations of the user interface unit 220 may be restricted by an operation of the network managing unit 240. Specifically, when preset authentication information is included in the received connection request information, automatic authentication is performed and thus the above-described displaying and authentication operations will be omitted.

The storage unit 230 stores the preset authentication information. The authentication information may be one of application information (e.g., a mobile printing application) and a pin code pre-stored in the image forming apparatus 200.

The storage unit 230 stores the wireless setting information received through the communication interface unit 210. Further, the storage unit 230 may store the printing data received through the communication interface unit 210. The storage unit 230 may be implemented with a storage medium within the image forming apparatus 200 and an external storage medium such as a removable disc including a USB memory, flash drive, etc., but is not limited thereto, a storage medium connected to an imaging apparatus, or a web server through a network.

The network managing unit 240 forms a link with the electronic apparatus 100 using the second communication network 20. Specifically, when preset authentication information is included in the received connection request information, the network managing unit 240 compares the included preset authentication information with the authentication information pre-stored in the image forming apparatus 200 to authenticate the corresponding electronic apparatus 100. As a result of the authentication, when it is determined that the received connection request information is connection request information of the authenticated apparatus, the network managing unit 240 may form a link with the authenticated apparatus. Specifically, the network managing unit 240 may transmit acknowledgement information to the electronic apparatus 100 through the second communication network 20 to form the link with the electronic apparatus 100 through the second communication network 20. The network managing unit 240 may control the user interface unit 220 to perform manual authentication based on a determination that the preset authentication information is not included in the received connection request information.

Further, the network managing unit 240 forms a link with the access point 300 using the third communication network 30. Specifically, the network managing unit 240 may form the link with the access point 300 through the third communication network 30 using the wireless setting information received through the communication interface unit 210. When the link between the image forming apparatus 200 and the electronic apparatus 100 via the access point 300 is formed by the link formation process, the network managing unit 240 may release the link with the electronic apparatus 100 using the second communication network 20.

The image forming unit 250 forms an image on a printing medium. Specifically, the image forming unit 250 may form an image corresponding to the printing data received through the communication interface unit 210. In the exemplary embodiment of the present general inventive concept, only a print operation has been described with reference to the image forming unit 250. Nevertheless, the image forming apparatus 200 may further include a functions such as scanning facsimile transmission/reception job, saving, and editing when the image forming apparatus 200 is an MFP capable of performing a plurality of different functions.

The controller 260 controls various components within the image forming apparatus 200. For example, in response to the connection request information being received from an external apparatus via the second communication network 20, the controller 260 determines whether the preset authentication information is included in the received connection request information.

As a result of a determination that the preset authentication information is included in the received connection request information, the controller 250 may control the network managing unit 250 to perform automatic authentication according to the preset authentication information. In response to a determination that the preset authentication information is not included in the received connection request information, the controller 260 may control the user interface unit 220 to display that an apparatus, which requests connection in the communication manner of the second communication network 20, is present, determine the apparatus to be an authenticated electronic apparatus 100, and may also transmit acknowledgement information to the electronic apparatus 100 based on an acknowledgement command being received from the user. Through the authentication process, the electronic apparatus 100 and the image forming apparatus 200 are linked through the second communication network 20, and wireless setting information of the access point 300 may be received through the formed link.

In response to the wireless setting information being received, the controller 260 may control the network managing unit 240 to form a link with the access point 300 through the third network communication network 30.

In response to printing data via the access point 300 being received from the electronic apparatus 100, the controller 260 may control the image forming unit 250 to print the received printing data.

The image forming apparatus 200 according to the above-described exemplary embodiment of the present general inventive concept receives the wireless setting information through a separate communication network separated from a wireless LAN in a physical or serviced manner, and automatically performs the wireless connection with the access point using the received wireless setting information, so that the user's convenience can be improved. Further, the connection process is performed in a wireless communication manner, and thus, a wired cable, as described in the related art, is unnecessary.

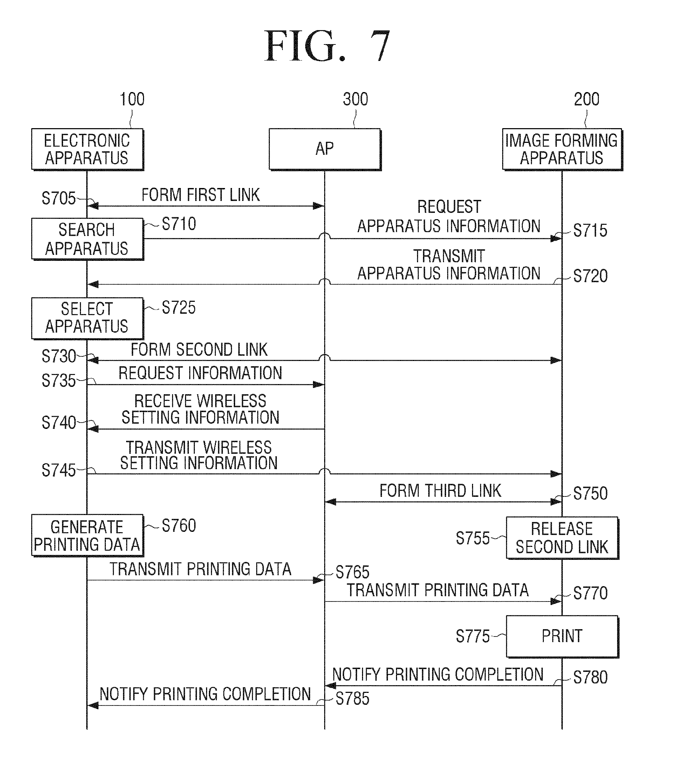

FIG. 7 is a sequence diagram illustrating a wireless connection method according to an exemplary embodiment of the present general inventive concept.

Referring to FIG. 7, first, the electronic apparatus 100 and the access point 300 are linked through the first communication network 10 (S705). Although FIG. 7 illustrates that one electronic apparatus 100 is connected to one access point 300, a plurality of electronic apparatuses 100 may be connected to one access point 300 through the first communication network 10.

When a new image forming apparatus 200 is placed in the above-described environment, the image forming apparatus 200 is required to be wirelessly connected to the access point 300 to in order to operate as a network image forming apparatus 200. That is, the image forming apparatus 200 is required to be wirelessly connected to the access point 300 to be able receive printing data from the plurality of electronic apparatuses 100. Although various wireless connection methods may be provided, in the exemplary embodiment, the electronic apparatus 100 transmits the wireless setting information to perform a wireless setting with the access point 300 to the image forming apparatus 200 through the second communication network 20, which is different from the first communication network 10, and the image forming apparatus 200 performs a wireless connection with the access point 300 using the received wireless setting information. Hereinafter, the wireless connection operation will be described in detail.

First, the electronic apparatus 100 searches to find an apparatus that supports the communication type of the second communication network 20, which is near the electronic apparatus 100 (S710), and requests apparatus information corresponding to the apparatus supporting the communication type of the second communication network 20 (S715). In response to the request, when the electronic apparatus 100 receives the apparatus information from the image forming apparatus 200 (S720), the electronic apparatus 100 identifies whether the searched apparatus is the image forming apparatus 200 and forms a second link with the apparatus identified as the image forming apparatus 200 (S730). If a plurality of image forming apparatuses are identified as the image forming apparatus 200, the electronic apparatus 100 may receive a selection of one of the plurality of image formation apparatuses from the user (S725). Further, when the electronic apparatus 100 already knows apparatus information (e.g., an apparatus name) of an image forming apparatus 200 to be connected, the selection operation may be omitted.

When the image forming apparatus 200 and the electronic apparatus 100 are connected via the second communication network 20, the electronic apparatus 100 requests wireless setting information from the access point 300 (S735) and then receives the wireless setting information from the access point 300 (S740). In the exemplary embodiment of the present general inventive concept, the wireless connection method illustrates that after the link is formed through the second communication network 20, the wireless setting information is received. However, the request and reception of the wireless setting information may be performed before the link using the second communication network 20 is formed.

In response to the wireless setting information being received, the electronic apparatus 100 transmits the wireless setting information collected through the second communication network 20 to the image forming apparatus (S745). At this time, the image forming apparatus 200 may form a third link with the access point 300 through the third communication network 30 using the received wireless setting information (S750). That is, the image forming apparatus 200 may be connected to the access point 300 using the received wireless setting information via a wireless LAN.

When the link via the access point 300 between the electronic apparatus 100 and the image forming apparatus 200 is formed, the link formed through the second communication network 20 between the electronic apparatus 100 and the image forming apparatus 200 may be released (S755).

Subsequently, in response to a printing request being received from the user, the electronic apparatus 100 generates printing data (S760) and transmits the generated printing data to the access point 300 (S765).

When the access point 300 receives the printing data, it transmits the received printing data to the image forming apparatus 200 (S770). The image forming apparatus 200 that receives the printing data performs a printing job on the received printing data (S775).
When the printing job is completed, the image forming apparatus 200 may notify the electronic apparatus 100 of the printing completion via the access point 300 (S780 and S785).

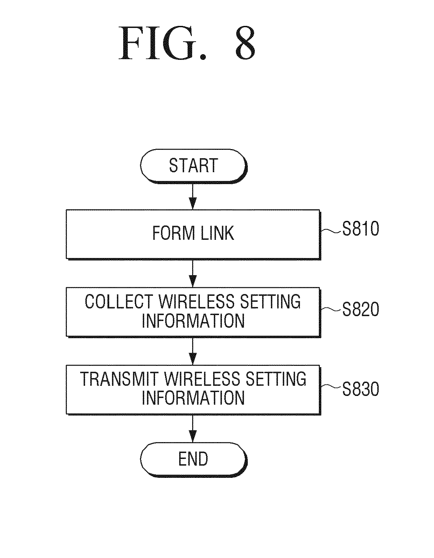

FIG. 8 is a flowchart illustrating a wireless connection method in the electronic apparatus 100 according to an exemplary embodiment of the present general inventive concept.

Referring to FIG. 8, first, the electronic apparatus 100 forms a link with the image forming apparatus 200 through the second communication network 20 (S810). Specifically, the electronic apparatus 100 which has formed a link with an access point 300 through the first communication network 10 may form the link with the image forming apparatus 200 through the second communication network 20 that is different from the first communication network 10.

The electronic apparatus 100 collects wireless setting information of the access point 300 (S820). Specifically, the electronic apparatus 100 may collect the wireless setting information of the access point 300 through the first communication network 10. The wireless connection method may also be implemented to perform the collection operation before forming the link with the image forming apparatus 200. Further, when the wireless setting information has been already collected and stored in the electronic apparatus 100, the collection operation may be omitted.

The electronic apparatus 100 transmits the wireless setting information (S830). Specifically, the electronic apparatus 100 transmits the collected wireless setting information of the access point 300 to the image forming apparatus 200 through the second communication network 20. The links via the access point 300 in the electronic apparatus 100 and the image forming apparatus 200 may be formed through the above-described transmission.

The wireless connection method according to the above-described exemplary embodiment of the present general inventive concept transmits the wireless setting information of the access point 300 to the image forming apparatus 200 through the second communication network 20. The wireless connection method may perform the wireless connection setting of the image forming apparatus 200 to the access point 300 even without a separate wired cable. The wireless connection method illustrated in FIG. 8 may be executed on the electronic apparatus 100 having the configuration of FIG. 2, FIG. 3, or on electronic apparatuses 100 having other configurations.

FIGS. 9 through 12 are flowcharts illustrating wireless connection methods according to a type of the second communication network 20.

Specifically, FIG. 9 is a flowchart illustrating a wireless connection method when the second communication network 20 is Wi-Fi Direct.

Referring to FIG. 9, the electronic apparatus 100 supports a wireless network and a Wi-Fi Direct network and the wireless network of two networks has been connected to the access point 300. The electronic apparatus 100 may include stored information of the image forming apparatus 200 to be connected.

In the above-described environment, the wireless connection method includes collecting wireless setting information of the access point 300 (S910).

The wireless connection method includes searching a wireless communication apparatus supporting Wi-Fi Direct around the electronic apparatus 100 using a Wi-Fi Direct network (S920).

The wireless connection method includes forming a link with a wireless communication apparatus having a predetermined name among the searched wireless communication apparatuses (S930). Specifically, the wireless connection method may include determining whether a wireless communication apparatus having the same information (e.g., an apparatus name) as the image forming apparatus 200 to be connected among the searched wireless communication apparatuses is present, and connecting the electronic apparatus 100 the wireless communication apparatus having the same information via Wi-Fi Direct. For example, when the name of Factory Default Wi-Fi Direct Device of the image forming apparatus 200 is SCX-3400, an installation application of the electronic apparatus 100 already knows the name of the Factory Default Wi-Fi Direct Device called SCX-3400, and may select the wireless communication apparatus to be connected using the name.

The above exemplary embodiment of the present general inventive concept describes that the electronic apparatus 100 already knows the image forming apparatus 200 to be connected thereto, but the electronic apparatus 100 is not required to know the apparatus information of the image forming apparatus 200 to be connected thereto in advance. As such, the electronic apparatus 100 may display a list of the wireless communication apparatuses searched as the Wi-Fi Direct manner, receive a selection of one of a plurality of displayed wireless communication apparatuses, and form a link with the selected wireless communication apparatus.

The electronic apparatus 100 receives a list of the access points 300 to which the image forming apparatus 200 can be connected from the image forming apparatus 200 (S940). Specifically, the electronic apparatus 100 may read a wireless network list (an AP list) to which the image forming apparatus 200 can be connected from the image forming apparatus 200.

The electronic apparatus 100 determines whether an access point 300 of which wireless setting information is collected is present in the received list of the access points 300 (S950).

In response to a determination that the access point 300 of which the wireless setting information is collected is not present in the received list of the access points 300 (S950-N), the electronic apparatus 100 displays the received list of the access points 300, receives a selection of one of the displayed access points 300, and receives the wireless setting information corresponding to the selected access point 300 (S960).

The electronic apparatus 100 may transmit the received wireless setting information to the image forming apparatus 200 (S970). Specifically, the electronic apparatus 100 may transmit information corresponding to the access point 300 to which the image forming apparatus 200 is required to be connected, as well as the wireless setting information to perform a connection with the access point300.

In response to a determination that the access point 300 of which the wireless setting information is collected is present in the received list of the access points 300 (S950-Y), the electronic apparatus 100 transmits the pre-collected wireless setting information to the image forming apparatus 200 (S980).

The image forming apparatus 200 that receives the wireless setting information performs wireless setting to the access point 300 using the received wireless setting information (S990).

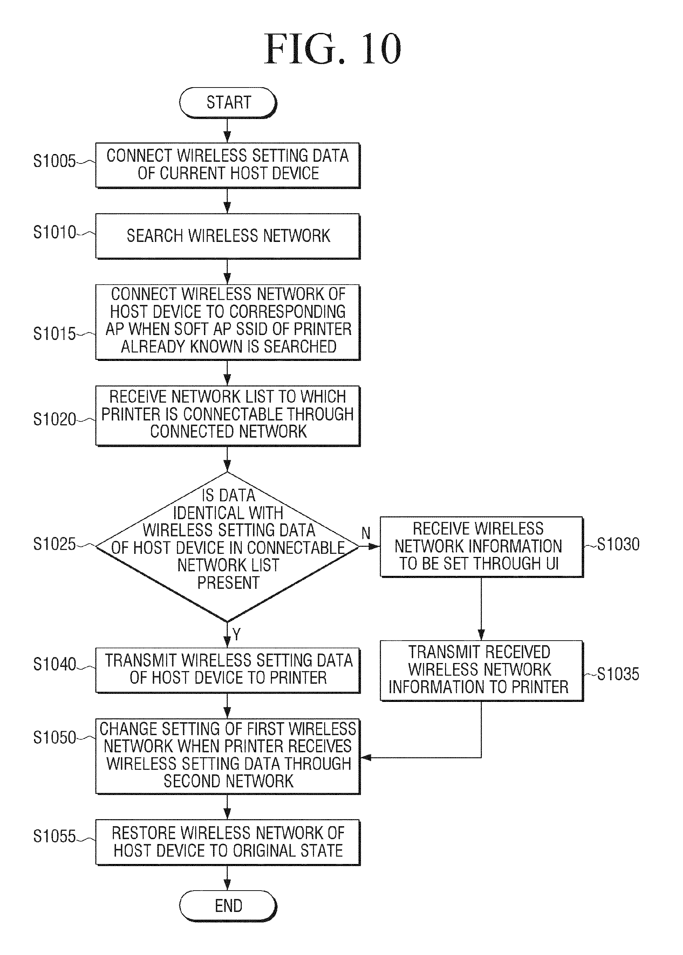

FIG. 10 is a flowchart illustrating a wireless connection method when the second communication network 20 is soft IP.

Referring to FIG. 10, when the electronic apparatus 100 supports a wireless network, the electronic apparatus 100 may be selectively connected to the access point 300 or soft IP of the image forming apparatus 200. The electronic apparatus 100 may have stored connection information (e.g., an SSID, network security, a network security key, etc.) of the soft AP of the image forming apparatus 200 to be connected. For example, when the name of Factory Default Soft AP of the image forming apparatus 200 is SCX-3400_AP, the electronic apparatus 100 may have already known the name of the Factory Default Soft AP called SCX-3400_AP and may be connected to the Soft AP of the image forming apparatus 200 using the information.

In the above-described environment, the wireless connection method includes collecting wireless setting information of the access point 300 (S1005).

The wireless connection method includes searching an access point 300 around of the electronic apparatus 100 using a wireless network (S1010).

The wireless connection method includes forming a link with an access point 300 having a predetermined name among the searched access points 300 (S1015). Specifically, the wireless connection method may include determining whether the access point 300 having the same information as soft AP of an image forming apparatus 200 to be connected is present among the searched access points 300 and connecting the electronic apparatus 100 to the soft AP of the determined image forming apparatus 200 in a wireless network manner.

The above exemplary embodiment of the present general inventive concept describes that the electronic apparatus 100 already knows the connection information of the soft AP of the image forming apparatus 200 connected thereto, but the electronic apparatus 100 is not required to know the connection information of the soft AP of the image forming apparatus 200 connected thereto in advance. In this case, the electronic apparatus 100 may display a list of the searched access points 300, receive a selection of one access point 300 from the displayed list, and form a link with the selected access point 300.

The electronic apparatus 100 receives a list of access points 300, to which the image forming apparatus 200 can be connected, from the image forming apparatus 200 (S1020). Specifically, the electronic apparatus 100 may read a wireless network list (an AP list) to which the image forming apparatus 200 can be connected.

The electronic apparatus 100 determines whether an access point 300 corresponding to the collected wireless setting information is present in the received list of the access points 300 (S1025).

In response to a determination that the access point 300 of which the wireless setting information is collected is not present in the received list of the access points 300 (S1025-N), the electronic apparatus 100 may display the received list of the access points300, receive a selection of one of the displayed access points 300, and receive wireless setting information corresponding to the selected access point 300 (S1030).

The electronic apparatus 100 may transmit the received wireless setting information to the image forming apparatus 200 (S1035). Specifically, the electronic apparatus 100 may transmit information of the access point 300 to which the image forming apparatus 200 has to be connected and the wireless setting information to perform a connection to the access point 300 via a wireless network.

In response to a determination that the access point 300 of which the wireless setting information is collected is present in the received list of the access points 300 (S1025-Y), the electronic apparatus 100 transmits the pre-collected wireless setting information to the image forming apparatus 200 (S1040).

The image forming apparatus 200 that receives the wireless setting information performs wireless setting to the access point 300 using the received wireless setting information (S1050).

The electronic apparatus 100 releases the wireless connection in the soft AP manner with the image forming apparatus 200, and is wirelessly connected to the access point 300 that is originally connected thereto (S1055). That is, the wireless network of the electronic apparatus 100 may be restored to an original state.

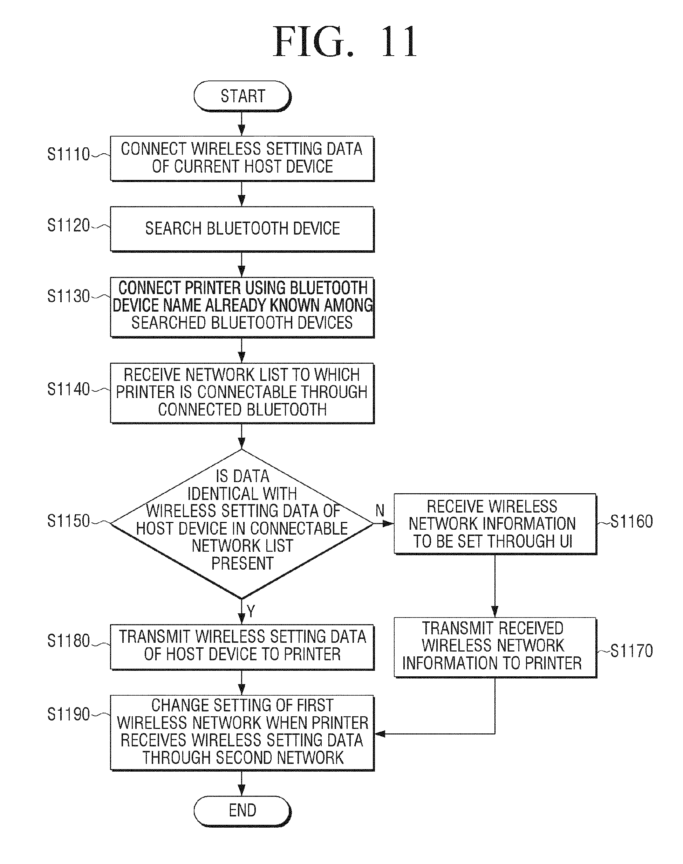

FIG. 11 is a flow chart illustrating a wireless connection method when the second communication network 20 is Bluetooth.

Referring to FIG. 11, the electronic apparatus 100 supports a wireless network and Bluetooth, and the wireless network of two networks has been connected to the access point 300. The electronic apparatus 100 has stored therein Bluetooth information of an image forming apparatus 200 to be connected thereto.

In the above-described environment, the wireless connection method according to the exemplary embodiment of the present general inventive concept includes collecting wireless setting information of the access point 300 (S1110).

The wireless connection method includes searching a Bluetooth device supporting Bluetooth as a wireless communication apparatus, such as the image forming apparatus 200, which is located in the vicinity around the electronic apparatus 100 using the Bluetooth (S1120).

The wireless connection method includes forming a link with a Bluetooth device having a predetermined name among the searched wireless communication apparatuses (S1130). Specifically, the wireless connection method may include determining whether the Bluetooth device having the same information (e.g., a Bluetooth device name) as an image forming apparatus 200 to be connected is present among the searched wireless communication apparatuses, and connecting the electronic apparatus 100 to the Bluetooth device having the same information via a Bluetooth connection. For example, when a name of Factory Default Bluetooth device of the image forming apparatus 200 is SCX-3400, an installation application of the electronic apparatus 100 in the exemplary embodiment may have already known the Bluetooth device name called SCX-3400, and the electronic apparatus 100 may be connected to the image forming apparatus 200 using the name.

The above exemplary embodiment of the present general inventive concept describes that the electronic apparatus 100 already knows the name of the Bluetooth device connected thereto, but the electronic apparatus is not required to know the device information of the Bluetooth device to be connected thereto in advance. As such, the electronic apparatus 100 may display a list of the Bluetooth devices searched via a Bluetooth connection and receive selection of one of the displayed Bluetooth devices.

The electronic apparatus 100 receives a list of the access points 300, to which the image forming apparatus can be connected, from the image forming apparatus 200 (S1140). Specifically, the electronic apparatus 100 may read a wireless network list (an AP list) to which the image forming apparatus 200 can be connected in a Bluetooth manner.

The electronic apparatus 100 determines whether an access point 300 corresponding to the collected wireless setting information is present in the received list of the access points 300 (S1150).

In response to a determination that the access point 300 of which the wireless setting information is collected is not present in the received list of the access points 300 (S1150-N), the electronic apparatus 100 may display the received list of the access points 300, receive a selection of one of the displayed access points300, and receive wireless setting information corresponding to the selected access point 300 (S1160).

The electronic apparatus 100 may transmit the received wireless setting information to the image forming apparatus 200 (S1170). Specifically, the electronic apparatus 100 may transmit information of the access point 300 to which the image forming apparatus 200 has to be connected and the wireless setting information to perform a connection with the access point 300 via the Bluetooth connection.

In response to a determination that the access point 300 of which the wireless setting information is collected is present in the received list of the access points 300 (S1150-Y), the electronic apparatus transmits the pre-collected wireless setting information to the image forming apparatus 200 via the Bluetooth connection (S1180).

The image forming apparatus 200 that receives the wireless setting information performs wireless setting to the access point 300 using the received wireless setting information (S1190). When the wireless setting is completed, the Bluetooth connection between the electronic apparatus 100 and the image forming apparatus 200 may be disconnected.

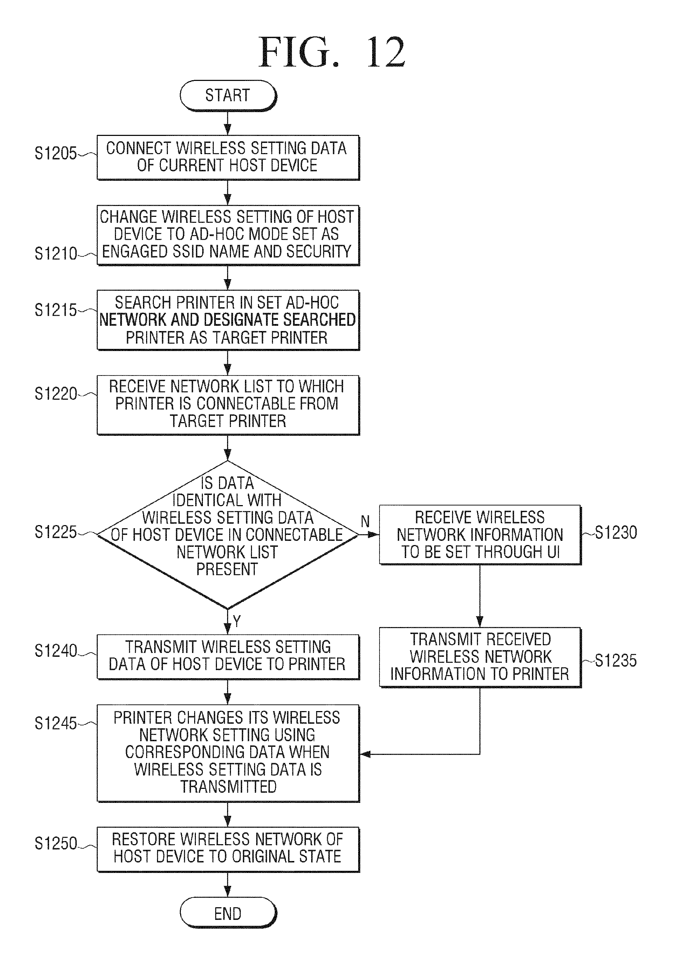

FIG. 12 is a flowchart illustrating a wireless communication connection when the second communication network 20 is an Ad-hoc mode.

Referring to FIG. 12, the electronic apparatus 100 may support a wireless network and the electronic apparatus 100 may be selectively connected to the image forming apparatus 200 in an Ad-hoc mode. Here, the electronic apparatus 100 already knows an apparatus name of an image forming apparatus 200 to be connected.

In the above-described environment, the wireless connection method includes collecting wireless setting information of the access point 300 (S1205).

The wireless connection method includes changing a mode of the electronic apparatus 100 to the Ad-hoc mode having a pre-engaged SSID name and setting of security (S1210).

The electronic apparatus 100 changed to the Ad-hoc mode searches an image forming apparatus 200 to be connected in the Ad-hoc mode and designates the searched image forming apparatus 200 as a target image forming apparatus 200 (S1215).

The electronic apparatus 100 receives a list of access points 300 to be connectable from the image forming apparatus 200 that is designated as the target image forming apparatus 200 (S1220). The electronic apparatus 100 may read a wireless network list (an AP list) to which the image forming apparatus 200 is connectable.

The electronic apparatus 100 determines whether an access point 300 corresponding to the collected wireless setting information is presented in the received list of the access points 300 (S1225).

When it is determined that the access point 300 of which the wireless setting information is collected is not present in the received list of the access points 300 (S1225-N), the electronic apparatus 100 may display the received list of the access points300, receive a selection of one of the displayed access points300, and receive wireless setting information corresponding to the selected access point 300 (S1230).

The electronic apparatus may transmit the received wireless setting information to the image forming apparatus 200 (S1235). Specifically, the electronic apparatus 100 may transmit information of the access point 300 to which the image forming apparatus 200 has to be connected and the wireless setting information to establish a connection with the access point 300.

In response to a determination that the access point 300 from which the wireless setting information is collected is present in the received list of the access points 300 (S1225-Y), the electronic apparatus 100 transmits the pre-collected wireless setting information to the image forming apparatus 200 (S1240).

The image forming apparatus 200 that receives the wireless setting information performs wireless setting to the access point 300 using the received wireless setting information (S1245).

The electronic apparatus 100 releases the Ad-hoc mode and is wirelessly connected to the access point 300 which is originally connected thereto (S1250). That is, the wireless network of the electronic apparatus 100 may be restored to an original state.

In FIGS. 9 through 12, the list of the connectable access points 300 are received in the electronic apparatus 100, but the present general inventive concept may be implemented such that the electronic apparatus 100 may directly transmit the collected setting information to the image forming apparatus 200 without reception of the list, and the image forming apparatus 200 may determine whether the access point 300 corresponding to the collected setting information is present.

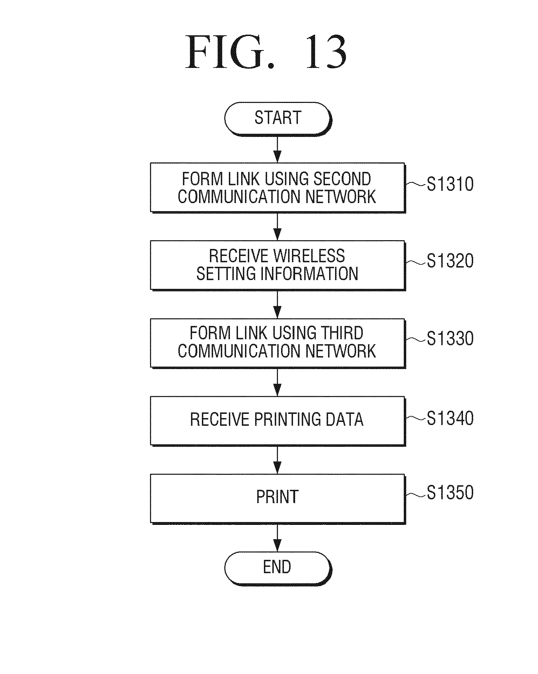

FIG. 13 is a flowchart illustrating an image forming method according to an exemplary embodiment of the present general inventive concept.

First, the image forming method includes forming a link with the electronic apparatus 100 using the second communication network 20 (S1310). Specifically, preset authentication information may be included in connection request information received from the electronic apparatus 100 and the image forming apparatus 200 may perform authentication with respect to a corresponding electronic apparatus 100 by comparing the preset authentication information included in the connection request information with authentication information pre-stored in the image forming apparatus 200. As a result of the authentication, when it is determined as the connection request information of the authenticated apparatus, the image forming apparatus 200 may form the link with the electronic apparatus 100 using the second communication network 20.

The image forming apparatus 200 receives wireless setting information of the access point 300 from the electronic apparatus 100 (S1320). Specifically, the image forming apparatus 200 may receive the wireless setting information of the access point 300 from the electronic apparatus 100 through the link using the second communication network 20.

The image forming apparatus 200 forms a link with the access point 300 via the third communication network 30 using the collected wireless setting information (S1330). Specifically, the image forming apparatus 200 may form the link with the access point 300 via the third communication network 30 different from the second communication network 20 using the collected wireless setting information. That is, the image forming apparatus 200 may perform setting of a wireless LAN for the wireless access point 300 using the collected wireless setting information. When the link with the access point 300 via the third communication network is formed as described above, the image forming apparatus 200 may release the link with the electronic apparatus 100 via the second communication network 20.

The image forming apparatus 200 receives printing data using the third communication network 30 (S1340). Specifically, the image forming apparatus 200 may receive the printing data via the access point 300 from the electronic apparatus 100.

The image forming apparatus 200 prints the received printing data (S1350). Specifically, when the image forming apparatus 200 receives the printing data via the access point 300 through the second communication network 20, the image forming apparatus 200 may perform a printing job on the received printing data.

The image forming method according to the above-described exemplary embodiment receives the wireless setting information through a network separated from a wireless LAN in a physical or serviced manner and automatically performs the connection with the access point using the received wireless setting information and thus the user's convenience is improved. Further the image forming method is performed in the wireless communication manner and thus the wired cable as in the related art is not necessary. The image forming method as illustrated in FIG. 13 may be executed on the image forming apparatus having the configuration of FIG. 6 or on image forming apparatuses having the other configurations.

The present general inventive concept, such as the method of performing image compensation as described above, can also be embodied as computer-readable codes on a computer-readable medium. The computer-readable medium can include a computer-readable recording medium and a computer-readable transmission medium.

The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few embodiments of the present invention have been shown and described, it will be appreciated by those skilled in the art that changes may be made in these embodiments without departing from the principles of the invention, the scope of which is defined in the appended claims.

## Claims

1. An electronic apparatus, comprising:
a network managing unit arranged to form a link with an access point through a first communication network (10) and form a link with an image forming apparatus through a second communication network (20) different from the first communication network;
a collecting unit arranged to collect wireless setting information of the access point; and
a controller arranged to transmit the collected wireless setting information to the image forming apparatus using the second communication network to form a link with the image forming apparatus via the access point.

2. The electronic apparatus as claimed in claim 1, wherein the second communication network is a network separated from the first communication network in a physical or serviced manner.

3. The electronic apparatus as claimed in claim 1 or 2, wherein the first communication network is a wireless local area network (LAN) and the second communication network is at least one selected from a group comprising wireless fidelity (Wi-Fi) Direct, Bluetooth, software enabled access point (soft AP), and an Ad-hoc mode.

4. The electronic apparatus as claimed in claim 1, 2 or 3, wherein the network managing unit is arranged to search wireless communication apparatuses supporting communication of the second communication network around the electronic apparatus and to form the link with one of the searched wireless communication apparatuses using the second communication network.

5. The electronic apparatus as claimed in claim 4, wherein the network managing unit is arranged to identify the image forming apparatus among the searched wireless communication apparatuses and to form the link with the wireless communication apparatus identified as the image forming apparatus using the second communication network.

6. The electronic apparatus as claimed in claim 5, wherein the network managing unit is arranged to identify the image forming apparatus among the searched wireless communication apparatuses using preset identification information.

7. The electronic apparatus as claimed in claim 4, 5 or 6, further comprising a user interface unit to display the searched wireless communication apparatuses and receive a selection of one of the displayed wireless communication apparatuses,
wherein the network managing unit is arranged to form the link with the selected wireless communication apparatus through the second communication network.

8. The electronic apparatus as claimed in any one of the preceding claims, wherein the collecting unit is arranged to select the access point to which the image forming apparatus linked using the second communication network is connectable and to collect wireless setting information of the selected access point.

9. The electronic apparatus as claimed in any one of claims 4 to 7, further comprising a user interface unit configured to display a plurality of searched access points and receive a selection of one of the displayed access points,
wherein the collecting unit is arranged to collect the wireless setting information of the selected access point.

10. The electronic apparatus as claimed in any one of the preceding claims, wherein the controller is arranged to determine whether the image forming apparatus is connectable to the access point,
the electronic apparatus further comprising a user interface unit configured to display information to notify that the image forming apparatus is not connectable to the access point when the image forming apparatus is not connectable to the access point.

11. The electronic apparatus as claimed in any one of the preceding claims, wherein the wireless setting information is at least one selected from the group consisting of security information, a service set identifier (SSID) and a connection password.

12. The electronic apparatus as claimed in any one of the preceding claims, further comprising:
a job generator configured to generate printing data; and
a communication interface unit configured to transmit the generated printing data using the link with the image forming apparatus via the access point.

13. The electronic apparatus as claimed in any one of the preceding claims, wherein the network managing unit is arranged to release the link with the image forming apparatus using the second communication network when the link with the image forming apparatus via the access point is formed.

14. An image forming apparatus, comprising:
a network managing unit arranged to form a link with an electronic apparatus using a communication network;
a communication interface unit arranged to receive wireless setting information of an access point from the electronic apparatus through the communication network;
a controller to control the network managing unit to form a link with the access point via a further different communication network using the received wireless setting information; and
an image forming unit to print data when the data is received using the further communication network.

15. A wireless connection method of an electronic apparatus comprising:
forming a link with an access point using a first communication network and forming a link with an image forming apparatus using a second communication network different from the first communication network;
collecting wireless setting information of the access point; and
transmitting the collected wireless setting information to the image forming apparatus through the second communication network to form a link with the image forming apparatus via the access point.
